# EUROPÄISCHE PATENTSCHRIFT

(11) **EP 1 333 083 B1**
(45) Veröffentlichungstag und Bekanntmachung des Hinweises auf die Patenterteilung: **31.03.2004**
(21) Anmeldenummer: 02001698.6
(22) Anmeldetag: 24.01.2002
(51) Int. Cl.: C12C 7/04, C12C 7/06

(54) **Vormaischer**
Apparatus for premashing
Appareil pour prétrempage

(43) Veröffentlichungstag der Anmeldung: 06.08.2003
(73) Patentinhaber: Anton Steinecker Maschinenfabrik GmbH, 85356 Freising-Attaching (DE)
(72) Erfinder: Kammerloher, Helmut, 85354 Freising (DE)
(74) Vertreter: Grünecker, Kinkeldey, Stockmair & Schwanhäusser Anwaltssozietät

(56) Entgegenhaltungen:
- CH-A- 1 306
- CH-A- 42 888
- DE-A- 2 808 712
- DE-A- 10 026 723
- DE-B- 1 222 454
- FR-A- 1 539 300
- US-A- 3 585 045

## Beschreibung

Die Erfindung bezieht sich auf einen Vormaischer für die Bierherstellung der im Oberbegriff des Anspruchs 1 erläuterten Art.

Bei der Bierherstellung muss das geschrotete Malz mit Wasser vermischt, d.h. eingemaischt werden, um unlösliche Stoffe, wie insbesondere die Stärke, in lösliche Stoffe, insbesondere in Zucker, zu überführen. Für eine gute Ausbeute und für eine reibungslose Weiterverarbeitung muss sichergestellt sein, dass das Schrot vollständig mit Wasser vermischt wird und keine Klumpen bleiben. Darüber hinaus besteht das Problem einer sehr intensiven Staubbildung, vor allem, wenn Schrot und Wasser über eine Fallleitung in das Maischegefäß eingebracht werden. Der feine Staub, der dabei aufsteigt, setzt sich an Bauteilen fest und bildet zusammen mit Wasserdampf klebrige Rückstände, die nur aufwändig entfernt werden können, insbesondere dann, wenn sogenanntes Pulverschrot mit extrem hohem Mehlanteil, wie es beispielsweise von einer Hammermühle geliefert wird, eingesetzt wird. Man setzt deshalb bereits sogenannte Vormaischer ein, die bislang lediglich aus einem Fallrohr zum Einleiten des Schrots bestehen, das oben auf das Maischegefäß aufgesetzt wird und eine Einlassöffnung für Wasser enthielten, so dass das Schrot und das Wasser bereits im Fallrohr vor dem Eintreten in das eigentliche Maischegefäß miteinander in Kontakt gebracht werden können. Die Wassereinleitung erfolgt entweder durch eine im Zentrum des Fallrohres oder sich ringförmig durch seine Wandung erstreckende Einlassöffnung. Das Wasser wird auf diese Weise unmittelbar nach dem Austreten aus der Einlassöffnung im Wesentlichen radial zum Fallrohr abgegeben, wird dann jedoch durch die Strömungsgeschwindigkeit des Schrots im Fallrohr parabelförmig in Richtung der Strömung des Schrots abgelenkt. Es musste jedoch festgestellt werden, dass auch mit diesem Vormaischer der Mischungsgrad zwischen Wasser und Schrot noch nicht optimal ist, da das Schrot von einer Art Wasserschleier eingehüllt wurde und dabei eine vollständige Durchmischung ausblieb.

Ein Vormaischer der im Oberbegriff des Anspruchs 1 berücksichtigten Art ist aus der CH-A-1 306 bekannt. Beim bekannten Vormaischer ist die Wandung des Fallrohres in einem vorbestimmten Bereich mit einer Vielzahl von Löchern durchsetzt, durch die Wasser am Umfang des Schrotstromes eingeleitet wird. Die Einleitung erfolgt radial einwärts.

Ein Beispiel eines Vormaischers mit im Zentrum des Fallrohres vorgesehener Wassereinleitung ist aus der FR-A-1 539 300 ersichtlich. Dieser Vormaischer weist Wasserleitungen auf, die sich zentral unterhalb eines Abweisers für den Schrotstrom befinden und schräg abwärts geneigt sind.

Ein weiteres Beispiel einer zentralen Wassereinleitung zeigt die CH-A-42 888. Bei diesem Vormaischer wird das Wasser in radialen Strahlen vom Zentrum des Schrotstromes aus eingeleitet.

Schließlich zeigt die DE-A-2 808 712 eine Vorrichtung zum Nassschroten mit Hilfe von Quetschwalzen, die zwischen einem Einweichbehälter und einer mit einem Rührwerk versehenen Kammer zur Homogenisierung von Wasser und gequetschtem Malz angeordnet sind. Die Wände im Bereich der Quetschwalzen sind mit Wasserzuführeinrichtungen versehen, die im Bereich dieser Wände einen Wasserfilm erzeugen. Durch diesen Wasserfilm sollen Materialanhäufungen aufgelöst und wieder in den Prozess zurückgeführt werden. Gleichzeitig soll dadurch die Vermischung mit Wasser verbessert werden. Zu diesem Zweck bilden die Stirnwände Leitflächen, die den Wasserfilm zur Oberfläche der Maische führen.

Der Erfindung liegt somit die Aufgabe zugrunde, den Durchmischungsgrad von Schrot und Maischwasser zu verbessern.

Die Aufgabe wird durch die im Anspruch 1 angegebenen Merkmale gelöst.

Durch die erfindungsgemäß erzeugten Turbulenzen konnte festgestellt werden, dass sich der Durchmischungsgrad von Schrot und Maischwasser unverhältnismäßig erhöht, ohne dass es zu einer Staubbildung auch bei Hammermühlenschrot mit hohem Mehlanteil kommt. Die Turbulenzen werden durch eine tangentiale Komponente des Maischwassers erzeugt. Auf diese Weise wird der radialen Strömung eine gewisse Rotationsströmung überlagert, die auf besonders wirksame Weise zu erhöhten Relativgeschwindigkeiten zwischen dem Schrot und dem Maischwasser führt, was die Durchmischung stark fördert und die Staubpartikel sofort bindet.

Diese tangentiale Komponente wird auf konstruktiv einfache Weise durch die in den Ansprüchen 2 bis 4 beschriebenen Leitflächen erzeugt.

Weiterhin können Maßnahmen vorgesehen sein, die die Strömungsgeschwindigkeit des Schrots und des Wassers beeinflussen. Eine dieser Möglichkeiten ist beispielsweise eine Verengung des Durchlassquerschnittes des Fallrohres, wie sie beispielsweise durch die in den Ansprüchen 5 bis 10 beschriebenen Maßnahmen vorgenommen werden kann, wobei die Rotationsstörelemente gemäß Anspruch 9 die Turbulenzen weiter erhöhen.

Eine weitere Maßnahme besteht nach Anspruch 10 in der Ausbildung der Einlassöffnung für das Maischwasser als Düse, derart, dass die Geschwindigkeit des Maischwassers über eine durchschnittliche Geschwindigkeit angehoben wird.

Die Erhöhung der Geschwindigkeit mit einem damit verbundenen Sogeffekt kann weiterhin durch den in Anspruch 11 vorgesehenen Verdrängungskörper für das Schrot im Bereich der Einlassöffnung für das Maischwasser gefördert werden.

Anspruch 12 beschreibt ein besonders bevorzugtes Ausführungsbeispiel eines Vormaischers.

Ausführungsbeispiele der Erfindung werden nachfolgend anhand der Zeichnungen näher erläutert. Es zeigen:
- Fig. 1: eine schematische Darstellung eines ersten Ausführungsbeispiels eines erfindungsgemäßen Vormaischers im Längsschnitt,
- Fig. 2: eine schematische Draufsicht auf den Bereich der Eintassöffnungen des Vormaischers gemäß Fig. 1,
- Fig. 3: eine herausvergrößerte Einzelheit im Bereich der Einlassöffnung des Vormaischers gemäß Fig. 1,
- Fig. 4: eine schematische Darstellung eines zweiten Ausführungsbeispiels eines erfindungsgemäßen Vormaischers im Längsschnitt,
- Fig. 5: eine Darstellung ähnlich Fig. 2 des Vormaischers gemäß Fig. 4, und
- Fig. 6: eine herausvergrößerte Einzelheit im Bereich der Einlassöffnung des Vormaischers gemäß Fig. 4.

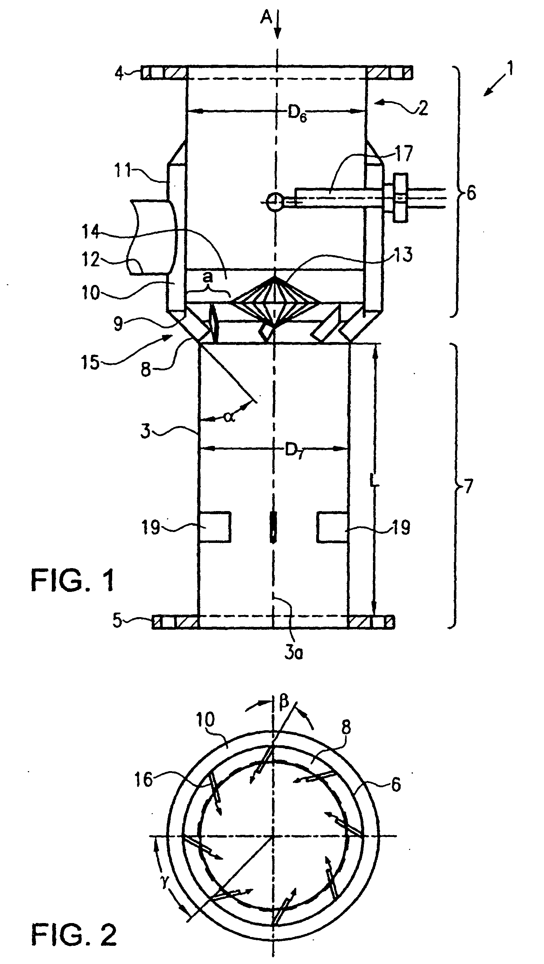

In den Fig. 1 bis 3 ist ein erstes Ausführungsbeispiel eines erfindungsgemäßen Vormaischers 1 ersichtlich, der eine insgesamt mit 2 bezeichnete Fallleitung aufweist, dessen Wandung 3 mit senkrechter Achse 3a angeordnet ist und über einen ersten Befestigungsflansch 4 mit dem Auslassstutzen eines Schrotbehälters, einer Förderleitung oder dgl., und mit einem zweiten Flansch 5 mit einem Maischegefäß derart verbindbar ist, dass das Schrot in einer senkrechten, schwerkraftbedingten Strömung A durch die Fallleitung 2 fällt.

Die Wandung 3 der Fallleitung 2 weist einen bezüglich der Strömungsrichtung A oberen Bereich 6 mit einer ersten Innenweite D₆, und einen in Strömungsrichtung A stromabwärtigen, unteren Bereich 7 mit einer Innenweite D₇ auf. D₆ ist größer als D₇ und geht mit einer Übergangsfläche 8 in D₇ über. Die Übergangsfläche 8 verläuft unter dem Winkel α in Strömungsrichtung A geneigt auf die Mittellinie 3a zu. Der Winkel α liegt etwa zwischen 30 bis 50°, bevorzugt bei etwa 40° bis 45°.

Der Bereich 7 der Wandung 3 weist eine Länge L auf, die bevorzugt mindestens 2 x D₇ beträgt. Im Bereich 7 sind, im Abstand zur Übergangsfläche 8, in Richtung auf die Mittellinie 3a vorstehende, in die Strömung reichende Elemente 19 vorgesehen, deren Zweck weiter unten näher erläutert wird.

Im bevorzugten Ausführungsbeispiel sind die Bereiche 6 und 7 mit kreisförmigem Querschnitt ausgebildet und bestehen aus handelsüblichen Rohrabschnitten, wobei sich die Bereiche 6 und 7 bevorzugt um einen standardisierten Rohmenndurchmesserschritt unterscheiden.

Zwischen der Übergangsfläche 8 und um den gesamten Umfang der Wandung 3 mündet eine spaltförmige Einlassöffnung 9 für Maischwasser in das Innere der Fallleitung 2. Die Einlassöffnung 9 steht mit einer Wasserverteilkammer 10 in Verbindung, die durch einen im Abstand zur Wandung 3 im oberen Bereich 6 angeordneten Mantel 11 gebildet wird. Die Wasserverteilkammer 10 erstreckt sich über den gesamten Außenumfang der Wandung 3 im Bereich 6 und über einen Teil der axialen Länge des Bereichs 6. In die Verteilkammer 10 mündet eine Wasserzufuhrleitung 12.

In der Nähe des Übergangs zwischen den Bereichen 6 und 7 der Wandung 3 ist symmetrisch um die Mittellinie 3a ein Verdrängungskörper 13 angeordnet, der von einer Halteeinrichtung 14 im Strömungsweg des Schrots und oberhalb der Einlassöffnung 9 gehalten wird. Der Verdrängungskörper 13 ist bevorzugt als Strömungskörper geformt, und hat im dargestellten Ausführungsbeispiel die Form eines Doppelkegels. Durch den Verdrängungskörper 13 wird der Strömungsquerschnitt in Strömungsrichtung A vor oder an der Wassereinlassöffnung 9 auf einen ringförmigen Durchlass mit der Ringbreite a verkleinert und anschließend wieder vergrößert.

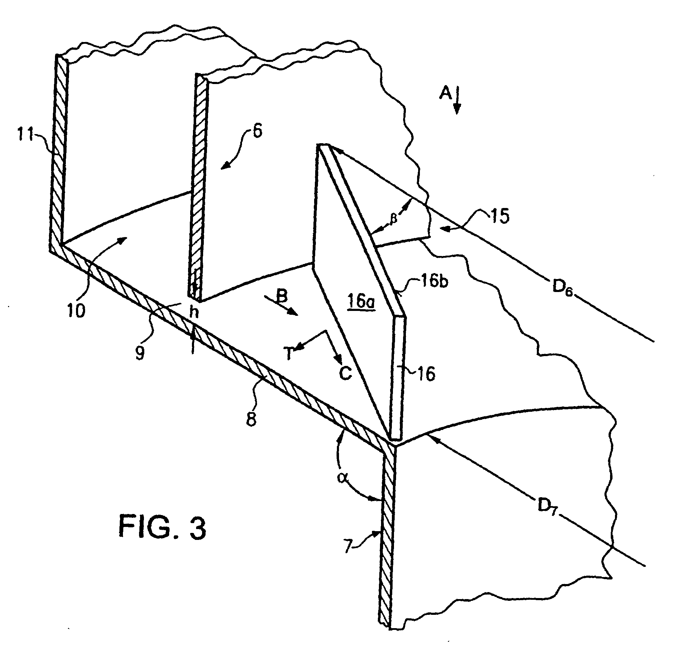

Wie insbesondere Fig. 3 zeigt, ist der Einlassöffnung 9 eine Strömungsleiteinrichtung 15 zugeordnet, die im vorliegenden Ausführungsbeispiel durch Leitbleche 16 gebildet wird, die hochkant auf der Übergangsfläche 8 stehen und von der Einlassöffnung 9 wegweisen. Die Leitbleche 16 können gleichzeitig die Funktion eines Abstandshalters zwischen dem Bereich 6 der Wandung 3 und der Übergangsfläche 8 übernehmen. Jedes Leitblech 16 weist zwei einander gegenüberliegende, parallele Leitflächen 16a und 16b auf und ist so angeordnet, dass es in den Innenraum des Fallrohrs 2 vorsteht, die Leitflächen 16a, 16b im Wesentlichen parallel zur Strömungsrichtung A verlaufen und einen Winkel β mit dem Durchmesser D₆ bzw. D₇ einschließen. Mit anderen Worten, die Leitbleche 16 sind so angeordnet, dass die Leitflächen 16a, 16b angenähert auf einem zur Mittellinie 3a laufenden Spiralmantel liegen, wobei "angenähert" bedeutet, dass die Leitflächen 16a, 16b selbst nicht unbedingt gekrümmt sein müssen sondern bevorzugt gerade sind. Der Winkel β liegt bevorzugt bei etwa 30°.

Durch die Leitfläche 16a wird das in Richtung B durch die Einlassöffnung 9 und auf der Übergangsfläche 8 einströmende Maischwasser in eine Richtung C parallel zur Leitfläche 16a abgelenkt, die eine tangentiale Komponente T aufweist. Auf diese Weise wird das Maischwasser auf eine Art Rotationsbahn gezwungen, und erzeugt Turbulenzen, die das Durchmischungsergebnis zwischen Schrot und Maischwasser stark verbessert.

Wie insbesondere Fig. 2 zeigt, enthält die Strömungsleiteinrichtung 15 eine Vielzahl von Leitblechen 16, die bevorzugt mit gleichmäßigen Winkelabständen δ, bevorzugt 45° um die ringspaltförmige Einlassöffnung 9 verteilt angeordnet sind. Dabei bremst die zweite Leitfläche 16b des Leitbleches 16 die Tangential- bzw. Umfangsbewegung des einströmenden Wassers und leitet dieses wiederum in Richtung auf die Mittellinie 3a.

Durch die Neigung der Übergangsfläche 8 um den Winkel a wirkt auch diese als Leitfläche mit Radialkomponente, so dass das Maischwasser sicher in das Innere des Fallrohres 2 gelangt.

Die Entstehung dieser Turbulenzen wird noch unterstützt durch eine als Düse ausgebildete Einlassöffnung 9, d.h. eine entsprechende verringerte Größe h, in diesem Falle eine verringerte Spaltbreite, die dafür sorgt, dass sich die Geschwindigkeit des eingeleiteten Wassers über die sonst übliche Durchschnittsgeschwindigkeit von 2 m/s erhöht.

Im oberen Bereich 6 der Fallleitung 2 ist weiterhin ein zusätzlicher Anschluss 17 vorgesehen, der als üblicher Reinigungs-Sprühkopf ausgebildet ist, der aber auch Wasser in das Innere des Schrotstromes in die Nähe seiner Mittellinie 3a zuführen kann.

Beim Betrieb des erfindungsgemäßen Vormaischers 1 fällt das Schrot in einem stetigen Strom in Richtung des Pfeiles A durch die Fallleitung 2 und trifft auf den Verdrängungskörper 13. Der Verdrängungskörper 13 lenkt den Schrotstrom in Richtung der Übergangsfläche 8 und in Richtung auf die Wassereinlassöffnung 9 ab. Durch die Wassereinlassöffnung 9 wird das Maischwasser mit erhöhter Geschwindigkeit und durch die als Leitfläche ausgebildete Übergangsfläche 8 sowie die Leitflächen 16a, 16b so eingeleitet, dass sich Turbulenzen bilden, die für eine gute Durchmischung des Schrots mit dem Maischwasser sorgen. Gleichzeitig wird eine gewisse Rotationsbewegung erzeugt, die sich fortsetzt wenn das Gemisch aus Schrot und Maischewasser in den zweiten Bereich 7 mit verringertem Durchmesser eintritt. Durch die größere Länge L und den geringerem Durchmesser wirkt der zweite Bereich 7 als Mischstrekke, die die Mischung intensiviert; und durch die als Rotationsstörelemente wirkenden Bleche 19 wird wieder in eine im Wesentlichen laminare Strömung erreicht. Durch die Reduzierung der Innenweite erhöht sich außerdem die Geschwindigkeit und damit sinkt der Druck. Es entsteht somit ein gewisser Saugeffekt, der durch den unmittelbar vor der Einlassöffnung 9 angeordneten Verdrängungskörper 13 weiter erhöht wird. In das Maischegefäß tritt dann ein bereits gut mit Wasser durchmischtes Schrot ein, das nicht mehr staubt und nicht zur Klumpenbildung neigt.

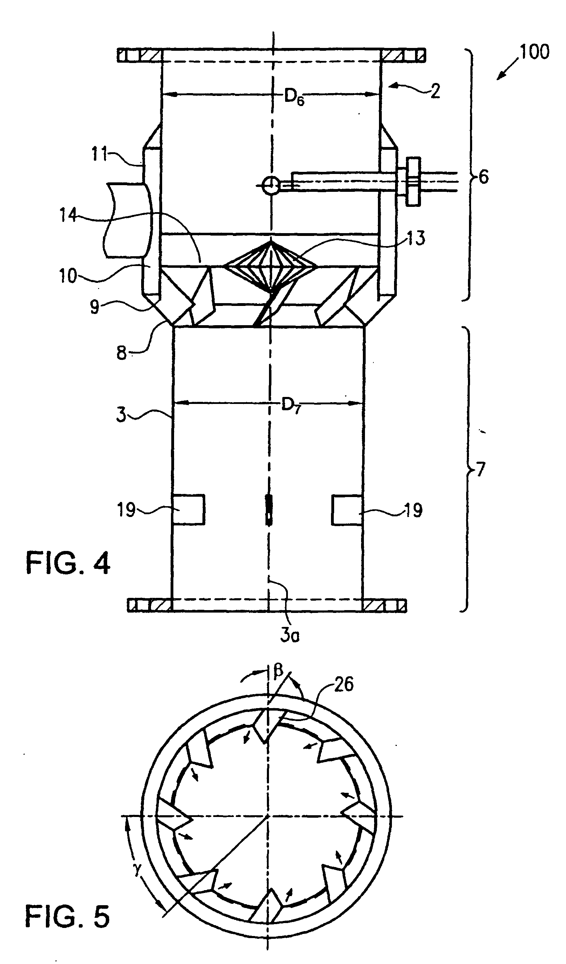

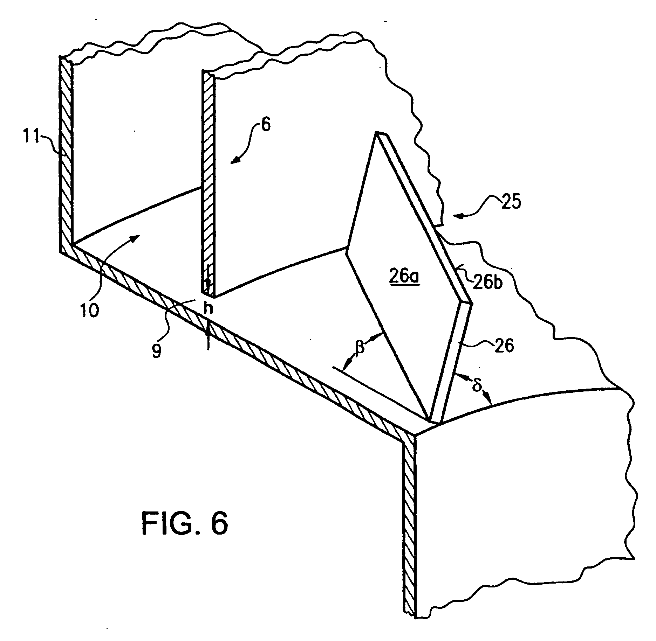

Die Fig. 4 bis 6 zeigen ein weiteres Ausführungsbeispiel eines erfindungsgemäßen Vormaischers 100, der bis auf die nachfolgend beschriebenen Einzelheiten identisch mit dem Vormaischer 1 aus Fig. 1 ist, wobei gleiche bzw. vergleichbare Bauteile mit den gleichen Bezugszeichen gekennzeichnet und nicht nochmals erläutert sind.

Der Vormaischer 100 unterscheidet sich vom Vormaischer 1 durch eine gegenüber der Strömungsleiteinrichtung 15 abgewandelte Strömungsleiteinrichtung 25. Auch die Strömungsleiteinrichtung 25 weist jedoch eine Vielzahl von Leitblechen 26 mit zwei parallel zueinander angeordneten Leitflächen 26a, 26b auf. Die Leitflächen 26a, 26b sind ebenfalls um den Winkel β gegenüber der Radialrichtung geschwenkt, sind jedoch zusätzlich um den Winkel δ gegenüber der Horizontalen geneigt. Damit liegen die Leitflächen 26a, 26b angenähert auf einem spiraligen Kegelmantel um die Mittellinie 3a, dessen Spitze nach oben weist. Dabei bedeutet "angenähert", dass die Leitflächen 26a, 26b nicht der Krümmung des spiraligen Kegelmantels folgen, sondern geradlinig verlaufen.

Die Wirkung der Strömungsleiteinrichtung 25 ist mit der der Strömungsleiteinrichtung 15 vergleichbar, mit dem Unterschied, dass das Maischwasser durch die Neigung um den Winkel δ stärker aufgefächert wird und bereits in der Fallleitung 2 vorhandene Staubpartikel frühzeitig bindet, sowie auch das Schrot aus der Strömungsrichtung A mit einer Tangentialkomponente um die Mittellinie 3a abgelenkt wird, was, insbesondere bei bestimmten Schrotqualitäten, die Ausbildung von Turbulenzen und die Durchmischung fördert.

In Abwandlung der beschriebenen und gezeichneten Ausführungsbeispiele kann die tangentiale Komponente auch durch eine schräge Anordnung der Einlassöffnung für das Maischwasser erzielt werden. Werden Leitflächen für eine Richtungsänderung des Maischwasserstroms eingesetzt, so können diese an den unterschiedlichsten Leitkörpem angeordnet sein und außer den beschriebenen ebenen Leitflächen auch gekrümmt oder gewinkelt sein.

## Patentansprüche

1. Vormaischer (1, 100) für die Bierherstellung, mit einer Fallleitung (2) für einen Schrotstrom und einer am Umfang des Schrotstroms in die Fallleitung (2) einmündenden Einlassöffnung (9) für Maischwasser, **dadurch gekennzeichnet, dass** die Einlassöffnung (9) eine Turbulenzen erzeugende Strömungsleiteinrichtung (15, 25) enthält, wobei die Strömungsleiteinrichtung (15, 25) derart ausgebildet ist, dass das Maischwasser mit einer tangentialen Komponente (T) bezüglich des Umfangs des Schrotstroms einleitbar ist.

2. Vormaischer nach Anspruch 1, **dadurch gekennzeichnet, dass** die Strömungsleiteinrichtung (15, 25) eine der Einlassöffnung (9) zugeordnete, sich in das Innere des Schrotstroms hineinerstreckende und das Maischwasser mit einer tangentialen Komponente (T) ablenkende, erste Leitfläche (16a, 26a) enthält.

3. Vormaischer nach Anspruch 2, **dadurch gekennzeichnet, dass** die erste Leitfläche (16a) angenähert auf einer sich parallel zur Strömungsrichtung (A) des Schrotstroms um ein Zentrum (3a) erstreckenden Spiralmantelfläche liegt

4. Vormaischer nach Anspruch 2, **dadurch gekennzeichnet, dass** die erste Leitfläche (26a) angenähert auf einer sich um ein Zentrum (3a) des Schrotstroms erstreckenden Spiralmantelfläche liegt.

5. Vormaischer nach einem der Ansprüche 1 bis 4, **dadurch gekennzeichnet, dass** die Strömungsleiteinrichtung (15, 25) eine der Einlassöffnung (9) zugeordnete, zweite Leitfläche (8) zum Ablenken des Maischwassers mit einer radialen Komponente bezüglich eines Zentrums (3a) des Schrotstroms aufweist.

6. Vormaischer nach einem der Ansprüche 1 bis 5, **dadurch gekennzeichnet, dass** die Fallleitung (2) stromaufwärts der Einlassöffnung (9) eine größere Innenweite (D₆) aufweist als stromabwärts der Einlassöffnung (9).

7. Vormaischer nach Anspruch 5 oder 6, **dadurch gekennzeichnet, dass** die zweite Leitfläche (8) als Übergangsfläche von der größeren auf die kleinere Innenweite (D₆, D₇) ausgebildet ist.

8. Vormaischer nach einem der Ansprüche 1 bis 7, **dadurch gekennzeichnet, dass** in der Fallleitung (2) stromabwärts der Einlassöffnung (9) eine Mischstrecke (7) vorgesehen ist, deren Länge (L) bevorzugt ihrer doppelten Innenweite (D₇) entspricht.

9. Vormaischer nach Anspruch 8, **dadurch gekennzeichnet, dass** an der Mischstrekke (7) Rotationsstörelemente (19) angeordnet sind.

10. Vormaischer nach einem der Ansprüche 1 bis 9, **dadurch gekennzeichnet, dass** die Einlassöffnung (9) als Düse zum Erhöhen der Maischwassergeschwindigkeit über eine durchschnittliche Geschwindigkeit von 2 m/s ausgebildet ist.

11. Vormaischer nach einem der Ansprüche 1 bis 10, **dadurch gekennzeichnet, dass** der Einlassöffnung (9) ein im Inneren der Fallleitung (2) angeordneter Verdrängungskörper (13) für den Schrotstrom zugeordnet ist.

12. Vormaischer nach einem der Ansprüche 1 bis 11, **dadurch gekennzeichnet, dass** die Wandung (3) der Fallleitung (2) einen bezüglich einer Strömungsrichtung (A) des Schrots stromaufwärtigen, ersten Bereich (6) mit einer ersten Innenweite (D₆), einen stromabwärtigen, zweiten Bereich (7) mit einer zweiten, kleineren Innenweite (D₇) und eine zwischen dem ersten und dem zweiten Bereich (6, 7) vorgesehene, in Strömungsrichtung (A) des Schrotstroms radial nach innen geneigte, als Leitfläche ausbildete, ringförmige Übergangsfläche (8) aufweist, dass die Einlassöffnung (9) für Maischwasser als sich ringförmige durch die Wandung (3) erstreckender Spalt ausgebildet ist und am stromaufwärtigen Ende der Übergangsfläche (8) einmündet, und dass an der Einlassöffnung (9) eine Vielzahl von zueinander beabstandeter Leitbleche (16, 26) angeordnet sind, die jeweils mit einer das Maischwasser mit einer tangentialen Komponente (T) ablenkenden Leitfläche (16a, 26a) versehen sind.

## Claims

1. Pre-masher (1, 100) for beer manufacture having a downpipe (2) for a grist stream and an inlet orifice (9) for mash liquor, which inlet orifice opens into the downpipe (2) at the periphery of the grist stream, **characterized in that** the inlet orifice (9) comprises a turbulence-producing flow guide device (15, 25), the flow guide device (15, 25) being constructed in such a manner that the mash liquor can be introduced with a tangential component (T) with respect to the periphery of the grist stream.

2. Pre-masher according to Claim 1, **characterized in that** the flow guide device (15, 25) contains a first guide surface (16a, 26a) which is assigned to the inlet orifice (9), extends into the interior of the grist stream and deflects the mash liquor with a tangential component (T).

3. Pre-masher according to Claim 2, **characterized in that** the first guide surface (16a) lies to an approximation on a spiral convex surface extending in parallel to the flow direction (A) of the grist stream around a centre (3a).

4. Pre-masher according to Claim 2, **characterized in that** the first guide surface (26a) lies to an approximation on a spiral conical surface extending around a centre (3a) of the grist stream.

5. Pre-masher according to one of Claims 1 to 4, **characterized in that** the flow guide device (15, 25) has a second guide surface (8) which is assigned to the inlet orifice (9) and is for deflecting the mash liquor with a radial component with respect to a centre (3a) of the grist stream.

6. Pre-masher according to one of Claims 1 to 5, **characterized in that** the downpipe (2) has a greater internal width (D₆) upstream of the inlet orifice (9) than downstream of the inlet orifice (9).

7. Pre-masher according to Claim 5 or 6, **characterized in that** the second guide surface (8) is constructed as a transition surface from the greater to the smaller internal width (D₆, D₇).

8. Pre-masher according to one of Claims 1 to 7, **characterized in that** a mixing section (7) is provided in the downpipe (2) downstream of the inlet orifice (9), the length (L) of which mixing section preferably corresponds to twice its internal width (D₇).

9. Pre-masher according to Claim 8, **characterized in that** rotation buffer elements (19) are disposed on the mixing section (7).

10. Pre-masher according to one of Claims 1 to 9, **characterized in that** the inlet orifice (9) is constructed as a nozzle for increasing the mash liquor velocity above an average velocity of 2 m/s.

11. Pre-masher according to one of Claims 1 to 10, **characterized in that** a displacement body (13) for the grist stream disposed in the interior of the downpipe (2) is assigned to the inlet orifice (9).

12. Pre-masher according to one of Claims 1 to 11, **characterized in that** the wall (3) of the downpipe (2) has an upstream, with respect to a grist flow direction (A), first region (6) having a first internal width (D₆), a downstream second region (7) having a second smaller internal width (D₇) and a ring-shaped transition surface (8) which is provided between the first and second regions (6, 7), is inclined in the flow direction (A) of the grist stream radially towards the interior and is constructed as a guide surface, **in that** the inlet orifice (9) for mash liquor is constructed as an annular gap extending through the wall (3) and opens out at the upstream end of the transition surface (8), and **in that** a multiplicity of guide vanes (16, 26), at a distance from one another, are disposed at the inlet orifice (9), each being provided with a guide surface (16a, 26a) deflecting the mash liquor with a tangential component (T).

## Revendications

1. Hydrateur (1, 100) pour la fabrication de bière, comportant une conduite de chute (2) pour un flux de malt égrugé et une ouverture d'entrée (9) pour la trempe débouchant sur la circonférence du flux de malt égrugé dans la conduite de chute (2), **caractérisé en ce que** l'ouverture d'entrée (9) comprend un dispositif de guidage d'écoulement (15, 25) produisant des turbulences, le dispositif de guidage d'écoulement (15, 25) étant conçu de telle sorte que la trempe peut être introduite avec une composante tangentielle (T) par rapport à la circonférence du flux de malt égrugé.

2. Hydrateur selon la revendication 1, **caractérisé en ce que** le dispositif de guidage d'écoulement (15, 25) comprend une première surface de guidage (18a, 26a) correspondant à l'ouverture d'entrée (9), s'étendant à l'intérieur du flux de malt égrugé et déviant la trempe avec une composante tangentielle (T).

3. Hydrateur selon la revendication 2, **caractérisé en ce que** la première surface de guidage (18a) est située à proximité d'une surface d'enveloppe en spirale s'étendant parallèlement au sens d'écoulement (A) du flux de malt égrugé autour d'un centre (3a).

4. Hydrateur selon la revendication 2, **caractérisé en ce que** la première surface de guidage (26a) est située à proximité d'une surface conique en spirale s'étendant autour d'un centre (3a) du flux de malt égrugé.

5. Hydrateur selon l'une des revendications 1 à 4, **caractérisé en ce que** le dispositif de guidage d'écoulement (15, 25) comprend une deuxième surface de guidage (8) correspondant à l'ouverture d'entrée (9), pour dévier la trempe avec une composante radiale par rapport à un centre (3a) du flux de malt égrugé.

6. Hydrateur selon l'une des revendications 1 à 5, **caractérisé en ce que** la conduite de chute (2) présente en amont de l'ouverture d'entrée (9) un plus grand diamètre interne (D₀) qu'en aval de l'ouverture d'entrée (9).

7. Hydrateur selon la revendication 5 ou 6, **caractérisé en ce que** la deuxième surface de guidage (8) est conçue comme surface de transition du grand diamètre interne au plus petit diamètre interne (D₆,D₇).

8. Hydrateur selon l'une des revendications 1 à 7, **caractérisé en ce que** dans la conduite de chute (2) est prévu en aval de l'ouverture d'entrée (9) un trajet de mélange (7) dont la longueur (L) correspond de préférence au double de son diamètre interne (D₇).

9. Hydrateur selon la revendication 8, **caractérisé en ce que** des éléments de perturbation de rotation (19) sont disposés dans le trajet de mélange (7).

10. Hydrateur selon l'une des revendications 1 à 9, **caractérisé en ce que** l'ouverture d'entrée (9) est conçue comme buse pour augmenter la vitesse de la trempe au-delà d'une vitesse moyenne de 2 m/s.

11. Hydrateur selon l'une des revendications 1 à 10, **caractérisé en ce qu'**à l'ouverture d'entrée (9) correspond un corps de refoulement (13) pour le flux de malt égrugé disposé à l'intérieur de la conduite de chute (2).

12. Hydrateur selon l'une des revendications 1 à 11, **caractérisé en ce que** la paroi (3) de la conduite de chute (2) comprend une première zone (6) amont par rapport à un sens d'écoulement (A) du malt égrugé ayant un premier diamètre interne (D6), une deuxième zone (7) aval ayant un deuxième diamètre interne (D7) plus petit et une surface de transition (8) annulaire, inclinée radialement vers l'intérieur dans le sens d'écoulement (A) du malt égrugé, conçue comme surface de guidage, prévue entre la première et la deuxième zone (6, 7), que l'ouverture d'entrée (9) pour la trempe est conçue comme fente s'étendant sous forme annulaire à travers la paroi (3) et débouche à l'extrémité aval de la surface de transition (8), et qu'à l'ouverture d'entrée (9) sont prévues une pluralité de tôles de guidage (16, 26) distantes entre elles, qui sont munies chacune d'une surface de guidage (16a, 26a) déviant la trempe avec une composante tangentielle (T).
